Europäisches Patentamt

European Patent Office

Office européen des brevets

(19)

(11) Numéro de publication : **0 128 847**
**B1**

(12)

# FASCICULE DE BREVET EUROPÉEN

(45) Date de publication du fascicule du brevet :
12.11.86

(51) Int. Cl.⁴ : **E 03 D   1/30**, F 16 K 31/528,
F 16 H 25/18, F 16 H 21/44

(21) Numéro de dépôt : **84430018.6**

(22) Date de dépôt : **30.05.84**

(54) **Mécanisme d'inversion de mouvement, et son application aux dispositifs d'évacuation des réservoirs de chasse d'eau.**

(30) Priorité : **02.06.83 FR 8309316**

(43) Date de publication de la demande :
**19.12.84 Bulletin 84/51**

(45) Mention de la délivrance du brevet :
**12.11.86 Bulletin 86/46**

(84) Etats contractants désignés :
**AT BE CH DE FR GB IT LI LU NL SE**

(56) Documents cités :
CH-A-   349 554
DE-B- 1 089 232
DE-C-   304 771
US-A- 1 755 145
US-A- 3 968 525

(73) Titulaire : **SOCIETE PHOCEENNE DE MATIERES PLASTIQUES " S P M P" Société Anonyme**
**120, avenue des Aygalades**
**F-13015 Marseille (FR)**

(72) Inventeur : **Molino, Jean-Claude**
**8, boulevard Lefebvre**
**F-13011 Marseille (FR)**
Inventeur : **Nardi, Bernard**
**3, boulevard de l'Espigoulier Super Gemenos**
**F-13420 Gemenos (FR)**

(74) Mandataire : **Marek, Pierre**
**28 & 32 rue de la Loge**
**F-13002 Marseille (FR)**

## Description

La présente invention concerne un mécanisme d'inversion de mouvement. Elle vise également l'application très avantageuse, quoique nullement limitative, de ce mécanisme à la réalisation de dispositifs d'évacuation des réservoirs de chasse d'eau à commande par bouton-poussoir.

Dans le domaine de l'application susmentionnée, on connaît (USA-A-3 968 525) des dispositifs d'évacuation des réservoirs de chasse d'eau à commande par bouton-poussoir, comportant un bouton-poussoir agissant, lors de son enfoncement, sur un système d'inversion de mouvement comprenant un levier monté avec une aptitude de basculement sur un axe porteur, l'une des extrémités de ce levier recevant la poussée du bouton-poussoir tandis que son extrémité opposée est reliée au clapet d'obturation de l'orifice de vidange du réservoir, au moyen d'un organe de transmission constitué par une chaîne ou une tige rigide.

De tels dispositifs conçus pour supplanter les systèmes d'évacuation dotés d'un bouton de commande agissant par traction (lequel présente notamment le désavantage d'être très exposé à des risques d'arrachement), sont cependant affectés d'un certain nombre d'inconvénients qui constituent certainement des obstacles à la progression de leur vulgarisation. Ces inconvénients résident notamment :

— dans le fait que tous les systèmes d'évacuation à commande par bouton-poussoir connus sont relativement encombrants, ce qui n'est pas propice si l'on considère : l'espace réduit dont on dispose à l'intérieur du réservoir, le volume d'eau souhaitable pour obtenir un processus de chasse d'eau efficace et la nécessité de loger également, dans ledit réservoir, le robinet à flotteur commandant l'admission d'eau ;

— dans le fait qu'il est nécessaire de prévoir un agencement spécial du réservoir pour l'installation de l'axe portant le levier pivotant ;

— dans le fait que certaines de leurs pièces mobiles sont orientées dans différentes directions et se déplacent suivant des trajectoires non parallèles, de sorte qu'elles ne sont pas parfaitement guidées, ce qui peut être une cause de fonctionnement défectueux ;

— dans le fait qu'il est nécessaire de maintenir la pression sur le bouton-poussoir durant le processus de chasse d'eau, et qu'il est possible d'interrompre ce processus en relâchant cette pression, ce qui est incompatible avec les règles d'hygiène modernes.

Un premier objectif visé par la présente invention est de réaliser un mécanisme d'inversion de mouvement peu encombrant, composé d'un minimum d'éléments simples comprenant deux éléments mobiles en translation dans des directions inverses.

Selon l'invention, ce but est atteint grâce à un mécanisme d'inversion de mouvement comprenant deux pièces mobiles suivant des mouvements rectilignes parallèles et guidées en translation, ces pièces étant pourvues de rainures concourantes traversées, à leur point d'intersection ou point de concours, par un axe d'entraînement mobile lequel traverse également une troisième rainure concourante de guidage que présente une pièce fixe, les extrémités des rainures concourantes dont sont dotées les pièces mobiles étant disposées sur des droites obliques par rapport à l'axe de translation desdites pièces mobiles, tandis que lesdites rainures concourantes sont inversement inclinées ou disposées par rapport à la normale ou droite perpendiculaire audit axe de translation, passant par le point d'intersection desdites rainures. De la sorte, lorsqu'une poussée est appliquée sur la pièce mobile d'entraînement, l'action de sa rainure inclinée provoque un déplacement latéral de l'axe d'entraînement guidé dans la rainure de la pièce fixe, ledit axe coulissant également dans la rainure inversement inclinée de la pièce mobile entraînée, en assurant le déplacement rectiligne de cette dernière dans une direction inverse de celle de ladite pièce mobile d'entraînement.

Un autre objectif poursuivi par la présente invention est de remédier aux inconvénients susmentionnés des systèmes d'évacuation des réservoirs de chasse d'eau pourvus d'un mécanisme de commande agissant par pression sur un bouton-poussoir.

Ce but est atteint, selon l'invention grâce à un dispositif d'évacuation comprenant le mécanisme d'inversion de mouvement précédemment décrit dont l'une des pièces aptes à être animées d'un mouvement rectiligne et que l'on nomme conventionnellement « pièce d'entraînement » dans la suite du présent exposé, est solidaire, en translation, du bouton-poussoir de commande dudit dispositif, tandis que la seconde pièce mobile en sens inverse que l'on appelle conventionnellement « pièce entraînée » dans la suite de la description, est solidaire, en translation, du clapet d'obturation de l'orifice de vidange du réservoir de chasse d'eau.

Selon une autre disposition caractérisante, la rainure inclinée que présente la pièce entraînée comporte une portion inférieure disposée verticalement ou parallèlement à l'axe de translation de ladite pièce entraînée laquelle est solidaire, en translation, d'une tige portant le clapet d'obturation de l'orifice de vidange et dont la portion inférieure est équipée d'un flotteur avantageusement constitué par une cloche disposée concentriquement autour de ladite portion inférieure.

Le dispositif d'évacuation de réservoir de chasse d'eau à commande par bouton-poussoir selon l'invention procure un certain nombre d'avantages intéressants tels que, par exemple :

— la mise en œuvre d'un mécanisme d'inversion de mouvement simple et économique ;

— un encombrement réduit, compte tenu du fait que tous ses organes ou groupes d'organes constitutifs sont rassemblés sur un axe commun ;

— l'inutilité d'un agencement particulier du réservoir, de sorte que ce dispositif peut être facilement et avantageusement substitué aux systèmes d'évacuation comportant un bouton de commande agissant par traction et déjà installés sur des réservoirs en service ;

— un fonctionnement sûr et de longue durée résultant du fait que tous ses organes mobiles se déplacent suivant des trajectoires parallèles et sont parfaitement guidés ;

— l'impossibilité d'interrompre le processus de rinçage lorsque ce dernier a été amorcé, ce qui respecte les normes d'hygiène actuelles.

Les buts, caractéristiques et avantages ci-dessus, et d'autres encore, ressortiront mieux de la description qui suit et des dessins annexés dans lesquels :

Les figures 1 et 2 sont des vues schématiques illustrant un mode d'exécution et le principe de fonctionnement du mécanisme d'inversion de mouvement selon l'invention.

La figure 3 est une vue en coupe axiale partielle d'un dispositif d'évacuation de réservoir de chasse d'eau à commande par bouton-poussoir équipé d'un mécanisme d'inversion de mouvement suivant l'invention, ce dispositif étant illustré dans une position correspondant à la fermeture de l'orifice de vidange du réservoir.

La figure 4 est une vue de côté de la pièce ou tige d'entraînement du mécanisme d'inversion de mouvement.

La figure 5 est une vue en coupe axiale de la pièce ou manchon fixe de ce mécanisme.

La figure 6 est une vue en coupe axiale de la pièce ou tige entraînée dudit mécanisme.

Les figures 7, 8 et 9 sont des vues de dessus des figures 4, 5 et 6, respectivement.

La figure 10 est une vue en coupe axiale du seul mécanisme d'inversion de mouvement à commande par bouton-poussoir, du dispositif d'évacuation représenté à la figure 3.

La figure 11 est une vue à plus grande échelle et en coupe suivant la ligne 11-11 de la figure 10.

Les figures 12 à 14 sont des vues partielles, en coupe axiale, illustrant le fonctionnement du mécanisme d'inversion de mouvement et du dispositif d'évacuation à commande par bouton-poussoir selon l'invention.

On se réfère auxdits dessins pour décrire le mécanisme d'inversion de mouvement selon l'invention, ainsi qu'un mode d'exécution avantageux, quoique nullement limitatif, de ce mécanisme dans une application particulièrement intéressante, à la réalisation d'un dispositif d'évacuation pour réservoir de chasse d'eau à commande par bouton-poussoir, également revendiqué par le présent brevet.

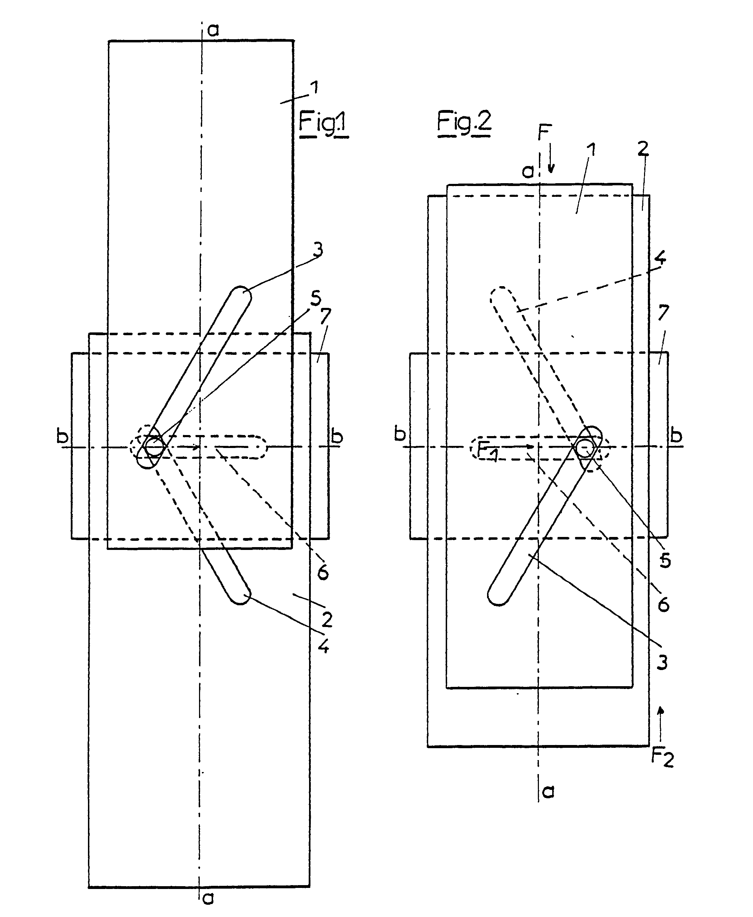

Ce mécanisme d'inversion de mouvement comprend deux pièces mobiles suivant des mouvements rectilignes parallèles et de sens contraires, soit une première pièce 1 et une seconde pièce 2 que l'on nomme conventionnellement « pièce d'entraînement » ou « tige d'entraînement » et « pièce entraînée » ou « tige entraînée », respectivement, dans la suite du présent exposé. Les pièces 1, 2 sont guidées en translation et elles sont pourvues de rainures concourantes 3 et 4, respectivement, dont les extrémités sont disposées sur des droites obliques par rapport à l'axe de translation a-a desdites pièces. D'autre part, ces rainures sont inversement inclinées ou disposées par rapport à la normale ou droite b-b perpendiculaire audit axe de translation. Les rainures 3 et 4 sont traversées, à leur point d'intersection ou « point de concours » par lequel passe la normale b-b, par un axe d'entraînement mobile 5 lequel traverse également une troisième rainure concourante de guidage 6 que présente une pièce fixe 7. La rainure fixe 6 peut avoir une direction perpendiculaire à l'axe de translation a-a des pièces mobiles, c'est-à-dire placée sur la normale b-b, comme illustré par les vues à caractère schématique des figures 1 et 2 ; elle peut aussi avoir, avantageusement, une orientation inclinée par rapport audit axe, comme on l'explique dans la suite du présent exposé.

On souligne aussi le fait que les rainures 3, 4 et 6 peuvent avoir une conformation droite ou courbe. Dans ce cas, la droite joignant les extrémités de chaque rainure peut être assimilée à l'axe longitudinal d'une rainure rectiligne. Pour cette raison, on emploie conventionnellement l'expression « rainure inclinée » dans la suite du présent exposé, cette expression pouvant aussi bien s'appliquer à des rainures rectilignes qu'à des rainures courbes dont les extrémités sont placées sur des droites obliques par rapport à l'axe longitudinal a-a.

Selon un mode d'exécution préférée, la pièce fixe 7 et la pièce mobile entraînée 2 et/ou la pièce mobile d'entraînement 1 sont conformées de manière complémentaire pour que ladite pièce fixe puisse constituer l'organe de guidage rectiligne de ladite pièce mobile entraînée et/ou de ladite pièce mobile d'entraînement. D'autre part, ces dernières sont également conformées pour pouvoir coulisser l'une dans l'autre, sans jeu excessif.

Les pièces mobiles 1 et 2 et la pièce fixe 7 peuvent avoir des formes très diverses : plates, tubulaires, cylindriques, etc., en fonction des applications du dispositif d'inversion de mouvement. Par exemple, dans l'application à la réalisation de dispositifs d'évacuation de réservoirs de chasse d'eau décrite ci-après, lesdites pièces ont avantageusement une forme cylindrique.

On comprend bien le fonctionnement du mécanisme d'inversion de mouvement selon l'invention, en se reportant, par exemple, aux schémas des figures 1 et 2.

Lorsqu'une poussée est appliquée, suivant flèche F, sur la pièce d'entraînement 1, l'action de la rainure inclinée 3 dont est pourvue cette dernière, a pour effet de repousser l'axe d'entraînement 5 suivant flèche F1, dans une direction latérale dont l'orientation est celle de la rainure 6 ménagée dans la pièce fixe et dans laquelle peut se déplacer ledit axe. Par suite de son logement dans la rainure inclinée 4 de la pièce entraînée, l'axe d'entraînement 5 glisse sur les bords longitudinaux pentés de ladite rainure, ce qui entraîne un mouvement rectiligne de ladite pièce entraînée, suivant flèche F2, dans un sens inverse de celui de la pièce d'entraînement.

Suivant les applications du mécanisme d'inversion de mouvement, le retour des pièces mobiles 1 et 2 peut être assuré par un organe élastique, électro-magnétique ou autre, ou par effet de gravité sous le poids de la pièce entraînée ou des équipements suspendus à cette dernière, comme c'est le cas dans l'application décrite ci-après.

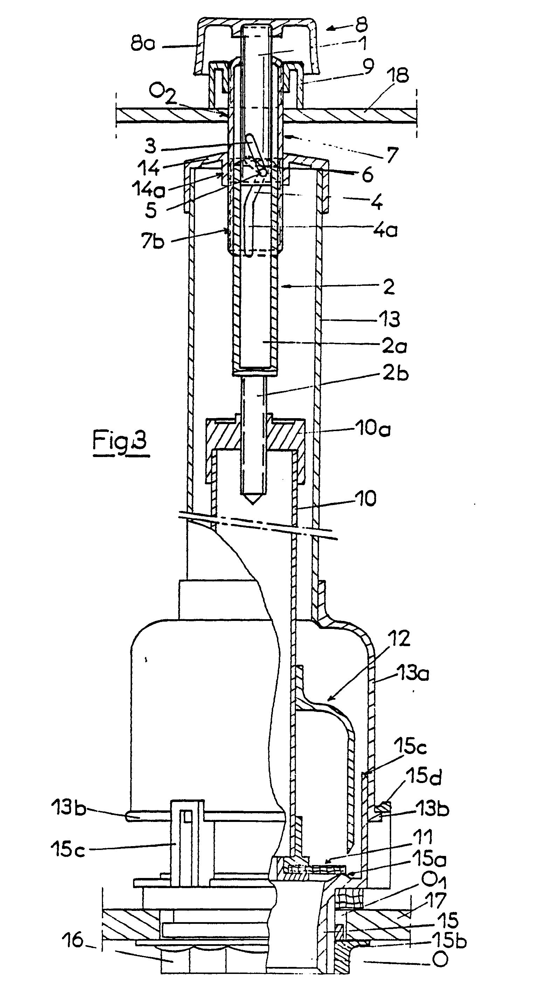

Les figures 3 à 14 illustrent l'application très intéressante du mécanisme d'inversion de mouvement selon l'invention à la réalisation d'un dispositif d'évacuation pour réservoir de chasse d'eau à commande par bouton-poussoir.

Ce dispositif comprend un bouton-poussoir 8, mobile axialement et verticalement, par exemple sur une course de l'ordre de 10 mm. Ce bouton-poussoir est solidaire, en translation, d'une tige cylindrique verticale constituée par la pièce d'entraînement 1 du mécanisme d'inversion de mouvement dont l'extrémité supérieure est assemblée audit bouton-poussoir par tout procédé ou moyen convenable.

Le bouton-poussoir comporte une jupe latérale 8a disposée coaxialement autour d'un bouton de calage fixe 9 solidaire d'une enveloppe ou manchon cylindrique constitué par la pièce fixe 7 dudit mécanisme d'inversion de mouvement.

De manière avantageuse, le bouton de calage 9 et le manchon cylindrique 7 fixes, sont assemblés par vissage, ledit bouton de calage et la portion supérieure dudit manchon cylindrique comportant, respectivement, à cet effet, un taraudage et un filetage 7c complémentaires. D'autre part, le manchon fixe 7 est disposé verticalement et il est doté d'un filetage extérieur 7b sur au moins sa portion inférieure.

A l'intérieur du manchon fixe, est montée, avec une aptitude de coulissement axial, une tige cylindrique alésée constituée par la pièce entraînée 2 du mécanisme d'inversion de mouvement, dont le guidage rectiligne est assuré par ledit manchon. A sa partie supérieure, ce dernier comporte un épaulement circulaire interne 7a servant de guidage rectiligne supérieur de la pièce ou tige d'entraînement 1 dont le guidage inférieur est assuré par la pièce ou tige entraînée dans l'alésage 2a de laquelle est montée la portion inférieure de ladite tige d'entraînement. La tige d'entraînement 1, la tige entraînée 2 et le manchon fixe 7 sont pourvus, respectivement, des rainures concourantes 3, 4 et 6 précédemment décrites.

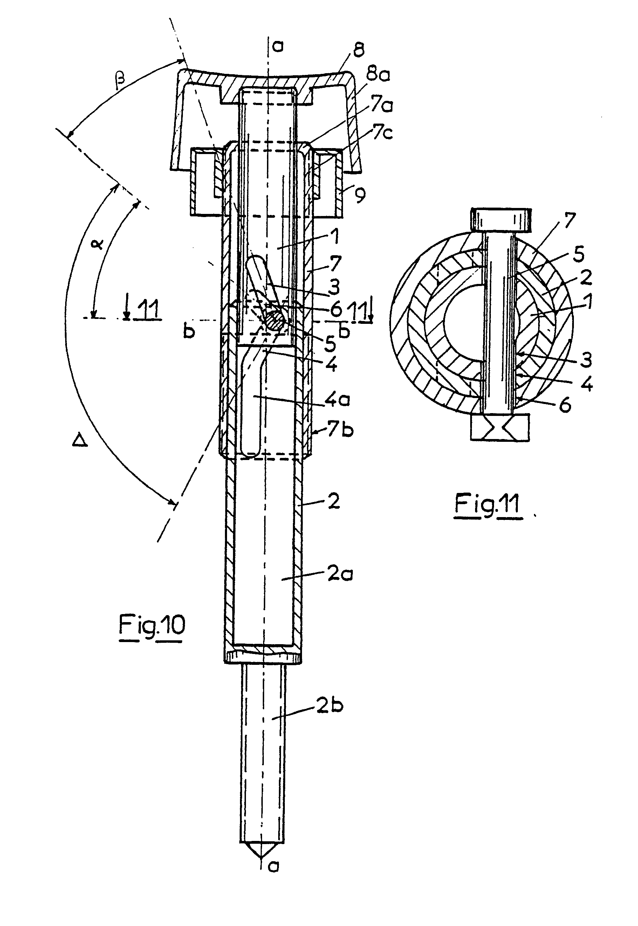

Toutefois, dans ce cas et comme illustré à la figure 10, la rainure 6 ménagée dans le manchon fixe 7 présente une inclinaison par rapport à la normale ou droite b-b perpendiculaire à l'axe de translation a-a des tiges mobiles 1 et 2, l'axe longitudinal de ladite rainure formant un angle α avec ladite droite. D'autre part, ledit axe longitudinal de la rainure 6 forme, avec l'axe longitudinal de la rainure 3 de la pièce d'entraînement 1, un

angle β plus petit que l'angle Δ qu'il forme avec l'axe longitudinal de la rainure 4 de la pièce entraînée 2.

D'autre part, selon une caractéristique importante de l'invention et dont l'intérêt est expliqué dans la suite du présent exposé, une lumière verticale 4a est ménagée dans le prolongement de la rainure inclinée 4 dont est pourvue la pièce ou tige entraînée 2, ladite lumière communiquant avec ladite rainure et étant orientée parallèlement à l'axe de translation de ladite tige entraînée.

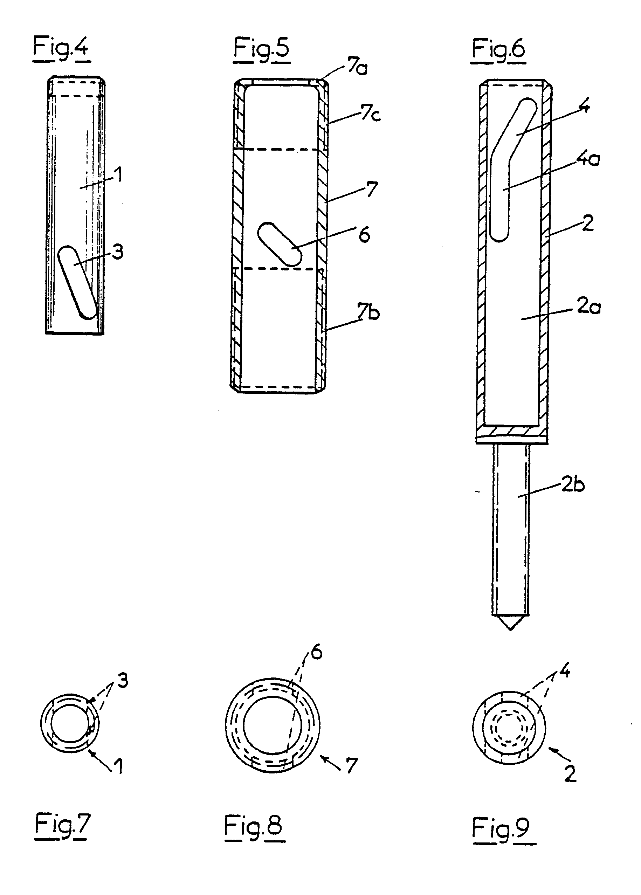

La conformation tubulaire cylindrique de la tige d'entraînement 1, de la tige entraînée 2 et du manchon fixe 7 permet d'obtenir un excellent guidage des pièces mobiles du mécanisme. On conçoit donc que, dans ce cas, ces pièces sont dotées, symétriquement, de deux rainures 3, 4, 4a, 6, respectivement, diamétralement opposées, comme le montrent les figures 7, 9 et 8, respectivement.

La tige entraînée 2 est assujettie, de manière séparable et réglable, à une tige tubulaire coaxiale 10 portant le clapet d'obturation 11 de l'orifice de vidange du réservoir de la chasse d'eau. La tige entraînée 2 est, par exemple, rigidement solidaire d'une vis 2b disposée dans le prolongement de sa portion inférieure et formée d'une seule pièce avec celle-ci. La vis 2b est vissée dans un écrou 10a dont est équipé, axialement, le sommet de la tige 10 laquelle est constituée par un tube cylindrique. Grâce à ce mode d'assemblage démontable, la tige entraînée 2 et la tige tubulaire porte-clapet 10 sont alignées et solidaires en translation.

Le clapet 11 est constitué par un joint d'étanchéité en forme de couronne circulaire installé dans une gorge périphérique dont est pourvue l'extrémité inférieure de la tige 10. La portion inférieure de ladite tige est agencée de manière à constituer un flotteur. De façon connue en soi, ce flotteur est formé par une cloche 12 disposée autour de la portion basse de la tige 10 et dont le bord inférieur est placé au-dessus et à distance réduite du plan dans lequel se trouve la face supérieure du clapet 11.

La partie inférieure du mécanisme d'inversion de mouvement et la tige-flotteur porte-clapet sont logées dans un carter tubulaire de protection et de guidage 13. L'extrémité supérieure de ce carter est équipé d'un chapeau 14 pourvu d'un orifice axial taraudé 14a constituant un écrou dans lequel est vissée la portion inférieure filetée du manchon 7 constituant la pièce fixe du dispositif d'inversion de mouvement.

Au dispositif selon l'invention, est encore associé un culot 15 comportant un orifice central 0 constituant l'orifice de vidange du réservoir et dont le bord circulaire supérieur 15a forme le siège du clapet 11. Ce culot, de conception connue en soi, est destiné à être installé fixement, au moyen d'un écrou 16 se vissant sur sa portion cylindrique inférieure filetée 15b, sur l'orifice d'évacuation 01 du réservoir. Il permet d'assurer la jonction entre ledit orifice d'évacuation et l'orifice d'entrée de l'eau de rinçage dans la cuvette du cabinet d'aisances. Il est apte à être assemblé, de manière amovible, à la base en forme de cloche 13a du carter ou enveloppe extérieure 13. Dans ce but, le culot comporte trois fourchettes de verrouillage 15c orientées vers le haut et disposées de manière équidistante autour et à distance de l'orifice de vidange 0. Entre les branches verticales de ces fourchettes, est réservé un espace permettant le passage du bord inférieur de la cloche extérieure 13a reposant dans le fond dudit espace, le verrouillage étant obtenu par une rotation du carter tubulaire 13, 13a permettant de placer les épaulements extérieurs 13b en forme d'arc de cercle dont est pourvue la base de ladite cloche extérieure, au-dessous du bec de retenue 15d dirigé vers l'intérieur dont est dotée la branche extérieure de chaque fourchette.

Lorsque le dispositif d'évacuation à commande par bouton-poussoir selon l'invention est installé dans un réservoir, il est assemblé, à l'aide des moyens précédemment décrits, au culot 15 positionné dans l'orifice d'évacuation 01 que présente le fond 17 du réservoir (partiellement représenté à la figure 3), tandis que la portion supérieure du manchon 7 traverse l'orifice 02 ménagé dans le couvercle 18 (partiellement illustré aux figures 3, 12, 13 et 14) dudit réservoir, et que le bouton fixe 9 vissé sur ladite portion supérieure prend appui sur la face supérieure dudit couvercle.

On observe que grâce à l'assemblage par vissage, d'une part, du manchon 7 et du carter tubulaire 13 et, d'autre part, de la vis 2b de la tige ou pièce entraînée 2 et de la tige porte-clapet 10, il est possible d'adapter aisément, par une simple rotation du mécanisme de commande à bouton-poussoir, la hauteur du dispositif d'évacuation selon l'invention à la profondeur du réservoir de chasse d'eau ; les filetages dudit manchon et de ladite vis ayant, dans ce but, un pas et un sens identiques.

On conçoit bien, après l'exposé qui précède, le fonctionnement du dispositif à bouton-poussoir selon l'invention.

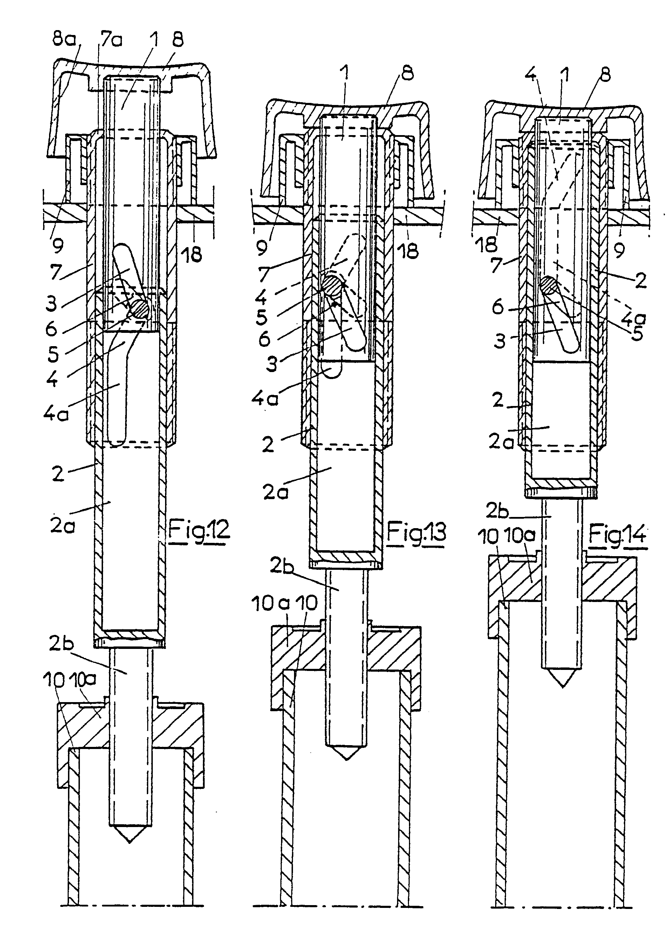

En phases de remplissage et d'inactivité (figures 3 et 12), le bouton-poussoir 8 est en position haute, tandis que le clapet 11 est appuyé sur son siège 15a.

En appuyant sur le bouton-poussoir 8, sur une course de l'ordre de 10 mm, on enfonce la tige d'entraînement 1 laquelle, par l'action de sa fente inclinée 3, provoque un mouvement latéral de l'axe 5 guidé dans la rainure 6 du manchon fixe 7, ledit axe coopérant, lors de ce déplacement latéral, avec la rainure inclinée 4 de la tige entraînée 2 à laquelle il communique, de la sorte, un mouvement ascendant (figure 13). On observe que l'inclinaison de la rainure fixe 6 par rapport à la normale b-b ou droite perpendiculaire à l'axe de translation a-a des tiges mobiles 1 et 2, permet d'obtenir une course ascendante de la tige entraînée 2, de longueur (par exemple de l'ordre de 20 mm) plus importante que celle de la course descendante de la tige d'entraînement 1. La translation ascendante de la tige entraînée 2 provoque une translation axiale correspondante de la tige porte-clapet 10 et, par conséquent, le soulèvement du clapet 11. Lorsque ce dernier est décollé de son siège 15a, la poussée ascendante qui s'exerce sur le flotteur 12 permet d'éloigner un peu plus ledit clapet de son siège, de façon à dégager complètement l'orifice de vidange 0 et permettre une action de chasse d'eau efficace. Ce soulèvement supplémentaire du clapet 11 sur une seconde course de l'ordre de 20 mm et le mouvement rectiligne correspondant de la tige entraînée 2 assujettie à la tige porte-clapet 10, sont rendus possibles par la prévision de la lumière verticale 4a ménagée dans le prolongement de l'extrémité inférieure de la rainure inclinée 4 de ladite tige entraînée.

On comprend donc que grâce au mécanisme inverseur de mouvement et au dispositif d'évacuation selon l'invention, la course du bouton-poussoir 8 et de la tige d'entraînement 1 est limitée à 10 mm, tandis que celle de l'ensemble : tige-entraînée 2-tige porte-clapet 10-clapet 11, est de 40 mm et constituée par deux mouvements successifs ayant, chacun, une amplitude de 20 mm.

Ces mouvements s'accomplissent dans un laps de temps très court, le processus de vidange se trouvant amorcé dès que l'on appuie sur le bouton-poussoir, et se poursuivant ensuite automatiquement, sans possibilité d'interruption.

A la fin du processus de vidange durant l'accomplissement duquel il n'est pas nécessaire de maintenir l'appui sur le bouton-poussoir, le clapet 11 revient automatiquement s'appliquer sur son siège, l'ensemble 2-10-11 redescendant par effet de gravité, en entraînant, dans la seconde moitié de sa course descendante, la remontée de la tige d'entraînement 1 et du bouton-poussoir 8 solidaire de cette dernière.

**Revendications**

1. Mécanisme d'inversion de mouvement pour dispositifs d'évacuation des réservoirs de chasse d'eau à commande par bouton-poussoir, caractérisé en ce qu'il comprend deux pièces (1, 2) mobiles suivant des mouvements rectilignes parallèles et guidées en translation, soit une pièce d'entraînement (1) et une pièce entraînée (2) ; ces pièces étant pourvues de rainures concourantes (3, 4) traversées, à leur point d'intersection, par un axe d'entraînement mobile (5) lequel traverse également une troisième rainure concourante de guidage (6) que présente une pièce fixe (7), les extrémités des rainures concourantes (3, 4) dont sont dotées les pièces mobiles (1, 2) étant disposées sur des droites obliques par rapport à l'axe de translation (a-a) desdites pièces mobiles, tandis que lesdites rainures concourantes (3, 4) sont inversement inclinées ou disposées par rapport à la normale ou droite (b-b) perpendiculaire audit axe de translation (a-a), passant par le point d'intersection desdites rainures (3, 4).

2. Mécanisme d'inversion de mouvement selon la revendication 1, caractérisé en ce que la pièce fixe (7) constitue l'organe de guidage rectiligne de la pièce entraînée (2) et/ou de la pièce d'entraînement (1).

3. Mécanisme d'inversion de mouvement suivant la revendication 2, caractérisé en ce que la pièce d'entraînement (1), la pièce entraînée (2) et la pièce fixe (7) ont une forme tubulaire, de préférence cylindrique.

4. Mécanisme d'inversion de mouvement selon l'une des revendications 2 ou 3, caractérisé en ce que l'une des pièces mobiles, de préférence la pièce entraînée (2), est montée avec une aptitude de coulissement axial dans la pièce fixe (7), tandis que la seconde pièce, de préférence la pièce d'entraînement (1), est partiellement logée, avec une latitude de coulissement axial, dans ladite pièce entraînée, ladite pièce fixe comportant un épaulement interne (7a) assurant un deuxième guidage rectiligne de ladite pièce d'entraînement.

5. Mécanisme d'inversion de mouvement suivant l'une quelconque des revendications 1 à 4, caractérisé en ce que l'axe longitudinal de la rainure de guidage (6) ménagée dans la pièce fixe (7) forme un angle (α) avec la normale ou droite (b-b) perpendiculaire à l'axe de translation (a-a) des pièces mobiles (1, 2) ; ledit axe longitudinal formant, de préférence, avec l'axe longitudinal de la rainure (3) de la pièce d'entraînement (1) un angle (β) plus petit que l'angle (Δ) qu'il forme avec l'axe longitudinal de la rainure (4) de la pièce entraînée (2).

6. Dispositif d'évacuation à commande par bouton-poussoir, pour réservoir de chasse d'eau, comprenant un bouton-poussoir (8), un mécanisme d'inversion de mouvement, un organe de transmission (10) constitué, de préférence, par une tige tubulaire, et un clapet (11) d'obturation de l'orifice de vidange (0) dudit réservoir, installé sur l'extrémité inférieure dudit organe de transmission, caractérisé en ce que ledit mécanisme d'inversion de mouvement est exécuté suivant l'une quelconque des revendications 1 à 5, la pièce ou tige d'entraînement (1) de ce mécanisme étant solidaire en translation du bouton-poussoir (8), tandis que sa pièce ou tige entraînée (2) est assujettie à l'organe de transmission (10) portant ledit clapet d'obturation (11).

7. Dispositif selon la revendication 6, caractérisé en ce qu'une lumière verticale (4a) est ménagée dans le prolongement de l'extrémité inférieure de la rainure inclinée (4) dont est pourvue la pièce ou tige entraînée (2) du mécanisme d'inversion de mouvement, ladite lumière verticale (4a) étant orientée parallèlement à l'axe de translation (a-a) de ladite pièce ou tige entraînée.

8. Dispositif suivant la revendication 7, caractérisé en ce que la portion inférieure de la tige (10) portant le clapet (11) d'obturation de l'orifice de vidange (0) est équipée d'un flotteur (12) lequel est, par exemple, constitué par une cloche disposée concentriquement autour de ladite portion inférieure.

9. Dispositif selon l'une quelconque des revendications 6 à 8, caractérisé en ce que la pièce d'entraînement (1) et la tige entraînée (2) sont logées dans une enveloppe ou manchon (7), de préférence cylindrique, constituant la pièce fixe du mécanisme d'inversion de mouvement et dont la partie supérieure est solidaire d'un bouton fixe (9) destiné à prendre appui sur la face supérieure du couvercle (18) du réservoir.

10. Dispositif suivant la revendication 9, comprenant un carter (13) entourant la tige porte-clapet (10) et dont la base (13a) est destinée à être assemblée à un culot (15) comportant un orifice central (0) constituant l'orifice de vidange du réservoir et dont le bord circulaire supérieur (15a) forme le siège du clapet (11), caractérisé en ce que l'enveloppe cylindrique (7) et ledit carter sont assemblés par vissage, ladite enveloppe cylindrique comportant, par exemple, un filetage extérieur (7b) au moyen duquel elle est vissée dans un orifice axial taraudé (14a) dont est pourvue l'extrémité supérieure (14) dudit carter.

11. Dispositif selon l'une des revendications 9 ou 10, caractérisé en ce que le bouton fixe (9) et l'enveloppe cylindrique fixe (7) sont assemblés par vissage, la portion supérieure de ladite enveloppe et ledit bouton fixe étant, par exemple, pourvus, respectivement, d'un filetage (7c) et d'un taraudage complémentaires.

12. Dispositif selon l'une quelconque des revendications 6 à 11, caractérisé en ce que la tige entraînée (2) est assujettie par vissage à la tige porte-clapet (10), l'extrémité inférieure de ladite tige entraînée se prolongeant, par exemple, par une vis (2b), de préférence formée d'une seule pièce avec cette dernière et vissée dans un écrou (10a) équipant axialement la partie supérieure de ladite tige.

13. Dispositif suivant les revendications 10 et 12, caractérisé en ce que le filetage (7b) de l'enveloppe cylindrique (7) et le filetage de la vis (2b) constituant la portion inférieure de la tige entraînée (2) ont un pas et un sens identiques.

## Claims

1. Mechanism for the inversion of movements for draining devices for flushing tanks controlled by push-button, characterised in that it comprises two members (1, 2) movable along parallel rectilinear paths and guided in translation, viz. a driving member (1) and a driven member (2) ; these members being provided with concurrent grooves (3, 4) traversed, at their point of intersection, by a movable driving shaft (5) which also passes through a third concurrent guiding groove (6) of a fixed member (7), the ends of the concurrent grooves (3, 4) with which are provided the movable members (1, 2) being disposed on straight lines oblique with respect to the axis of translation (a-a) of the said movable members, the said concurrent grooves (3, 4) being inversely inclined or disposed with respect to the normal or straight line (b-b) perpendicular to the said axis of translation (a-a), passing through the point of intersection of the said grooves (3, 4).

2. Mechanism for the inversion of movements according to claim 1, characterised in that the fixed member (7) constitutes the means for rectilinear guiding of the driven member (2) and/or of the driving member (1).

3. Mechanism for the inversion of movements according to claim 2, characterised in that the driving member (1), the driven member (2) and the fixed member (7) have a tubular shape, preferably cylindrical.

4. Mechanism for the inversion of movements according to one of claims 2 or 3, characterised in that one of the movable members, preferably the driven member (2), is mounted with a capability of axial sliding in the fixed member (7), whilst the second member, preferably the driving member (1), is partially disposed, with a latitude of axial sliding, in the said driven member, the said fixed member comprising an internal shoulder (7a) assuring a second rectilinear guiding of the said driving member.

5. Mechanism for the inversion of movements according to any one of claims 1 to 4, characterised in that the longitudinal axis of the guiding groove (6) formed in the fixed member (7) forms an angle (α) with the normal or straight line (b-b) perpendicular to the axis of translation (a-a) of the movable members (1, 2) ; the said longitudinal axis forming, preferably, with the longitudinal axis of the groove (3) of the driving member (1) an angle (β) less than the angle (Δ) which it forms with the longitudinal axis of the groove (4) of the driven member (2).

6. Draining device controlled by push-button, for flushing tank, comprising a push-button (8), a mechanism for inversion of movements, a transmission member (10) constituted preferably by a tubular rod, and a valve (11) for closing of the emptying orifice (0) of the said tank, installed on the lower end of the said transmission member, characterised in that the said mechanism for the inversion of movements is constructed according to any one of claims 1 to 5, the driving member or rod (1) of this mechanism being fast in translation with the push-button (8), whilst its driven member or rod (2) is coupled to the transmission member (10) carrying the said closing valve (11).

7. Device according to claim 6, characterised in that a vertical slot (4a) is provided in extension of the lower end of the inclined groove (4) with which is provided the driven member or rod (2) of the mechanism for the inversion of movements, the said vertical slot (4a) being disposed parallel to the axis of translation (a-a) of the said driven member or rod.

8. Device according to claim 7, characterised in that the lower portion of the rod (10) carrying the closing valve (11) of the emptying orifice (0) is equipped with a float (12) which is, for example, constituted by a bell disposed concentrically about the said lower portion.

9. Device according to any one of claims 6 to 8, characterised in that the driving member (1) and the driven rod (2) are housed in an envelope or sleeve (7), preferably cylindrical, constituting the fixed member of the mechanism for the inversion of movements and the upper part of which is fast with a fixed button serving to bear upon the upper face of the cover (18) of the tank.

10. Device according to claim 9, comprising a housing (13) surrounding the valve-bearing rod (10) and of which the base (13a) serves to be assembled with a stem (15) comprising a central orifice (0) constituting the emptying orifice of the tank and of which the circular upper edge (15a) forms the seating of the valve (11), characterised in that the cylindrical envelope (7) and the said housing are assembled by threading, the said cylindrical envelope comprising, for example, an external thread (7b) by means of which it is threaded into a tapped axial orifice (14a) with which is provided the upper end (14) of the said housing.

11. Device according to one of claims 9 or 10, characterised in that the fixed button (9) and the fixed cylindrical envelope (7) are assembled by threading, the upper portion of the said envelope and the said fixed button being, for example, provided respectively with a threading (7c) and a complementary tapping.

12. Device according to any one of claims 6 to 11, characterised in that the driven rod (2) is coupled by threading to the valve-bearing rod (10), the lower end of the said driven rod being extended, for example, by a screw (2b), preferably formed integrally with the latter and threaded into a nut (10a) provided axially on the upper part of the said rod.

13. Device according to claims 10 and 12, characterised in that the threading (7b) of the cylindrical envelope (7) and the threading of the screw (2b) constituting the lower portion of the driven rod (2) have the same pitch and direction.

**Patentansprüche**

1. Mechanismus zum Umkehren von Bewegungen für Dränagevorrichtungen für Spülbecken mit Drückerbedienung, dadurch gekennzeichnet, daß er zwei, geradlinigen, parallelen Bewegungen folgende und bei der Verschiebung geführte, bewegliche Stücke (1, 2), nämlich ein Mitnehmerstück (1) und ein mitgenommenes Stück (2) aufweist ; wobei diese Stücke mit in einem Punkt zusammenlaufenden Nuten (3, 4) versehen sind, die in ihrem Schnittpunkt von einer bewegliche Mitnehmerachse (5) durchkreuzt werden, welche auch eine dritte, durch denselben Punkt gehende Führungsnut (6), die ein stationäres Stück (7) aufweist, durchquert, wobei die Enden der in einem Punkt zusammenlaufenden Nuten (3, 4), mit welchen die beweglichen Teile (1, 2) ausgestattet sind, im Verhältnis zur Translationsachse (a-a) der besagten beweglichen Stücke auf schrägen Geraden angeordnet sind, während die besagten, in einem Punkt zusammenlaufenden Nuten (3, 4) im Verhältnis zur Normalen oder Geraden (b-b), die zu besagter Translationsachse (a-a) senkrecht liegt, wobei sie durch den Schnittpunkt der besagten Nuten (3, 4) verläuft, umgekehrt geneigt oder angeordnet sind.

2. Mechanismus zum Umkehren von Bewegungen nach Anspruch 1, dadurch gekennzeichnet, daß das stationäre Stück (7), das Organ zur geradlinigen Führung des mitgenommenen Stückes (2) und/oder des Mitnehmerstückes (1) bildet.

3. Mechanismus zum Umkehren von Bewegungen nach Anspruch 2, dadurch gekennzeichnet, daß das Mitnehmerstück (1), das mitgenommene Stück (2) und das stationäre Stück (7) eine röhrenartige, vorzugsweise zylindrische, Form aufweisen.

4. Mechanismus zum Umkehren von Bewegungen nach einem der Ansprüche 2 oder 3, dadurch gekennzeichnet, daß eines der beweglichen Stücke, vorzugsweise das mitgenommene Stück (2) axial gleitbar in dem stationären Stück (7) montiert ist, während das zweite Stück, vorzugsweise das Mitnehmerstück (1) teilweise mit axialem Spielraum in dem besagten mitgenommenen Stück sitzt, wobei das besagte stationäre Stück einen inneren Absatz (7a) aufweist, der eine zweite, geradlinige Führung des besagten Mitnehmerstückes gewährleistet.

5. Mechanismus zum Umkehren von Bewegungen nach einem der Ansprüche 1 bis 4, dadurch gekennzeichnet, daß die in dem stationären Stück (7) ausgesparte Längsachse der Führungsnut (6), mit der zur Translationsachse (a-a) der beweglichen Stücke (1, 2) senkrecht liegenden Normalen oder Geraden (b-b) einen Winkel (α) bildet ; die besagte Längsachse vorzugsweise mit der Längsachse der Nut (3) des Mitnehmerstücks (1) einen Winkel (β) bildet, der kleiner ist als der Winkel (Δ), den sie mit der Längsachse der Nut (4) des mitgenommenen Stückes (2) bildet.

6. Dränagevorrichtung mit Drückerbedienung für Spülbecken, bestehend aus einem Drückerknopf (8), einem Mechanismus zum Umkehren von Bewegungen, einem Übertragungselement (10), das vorzugsweise aus einer röhrenförmigen Stange besteht, und einer Verschlußklappe (11) für die Auslauföffnung (0) des besagten Beckens, die an dem Ende des besagten Übertragungselements installiert ist, dadurch gekennzeichnet, daß der besagte Mechanismus zum Umkehren von Bewegungen nach einem der Ansprüche 1 bis 5 ausgeführt ist, wobei das Mitnehmerstück oder -stange (1) dieses Mechanismus bei Verschiebung mit dem Drückerknopf (8) fest verbunden ist, während sein mitgenommenes Stück oder Stange (2) an dem Übertragungselement (10) befestigt ist, welches die besagte Verschlußklappe (11) trägt.

7. Vorrichtung nach Anspruch 6, dadurch gekennzeichnet, daß ein vertikales Langloch (4a) in der Verlängerung des unteren Endes der geneigten Nut (4), womit das mitgenommene Stück oder Stange des Mechanismus zum Umkehren von Bewegungen versehen ist, ausgespart ist, wobei das vertikale Langloch (4a) parallel zur Translationsachse (a-a) des besagten mitgenommenen Stücks oder Stänge ausgerichtet ist.

8. Vorrichtung nach Anspruch 7, dadurch gekennzeichnet, daß der untere Teil der Stange (10), welche die Klappe (11) der Auslauföffnung (0) trägt, mit einem Schwimmer (12) ausgestattet ist, welcher z. B. aus einer konzentrisch um das besagte untere Teil angeordneten Glocke besteht.

9. Vorrichtung nach einem der Ansprüche 6 bis 8, dadurch gekennzeichnet, daß das Mitnehmerstück (1) und die mitgenommene Stange (2) in einer vorzugsweise zylindrischen Hülle oder Muffe (7) liegen, welche das stationäre Stück des Mechanismus zum Umkehren von Bewegungen bildet, und derem oberer Teil mit einem feststehenden Knopf (9) fest verbunden ist, der dazu bestimmt ist, sich auf der Oberseite des Deckels (18) des Beckens abzustützen.

10. Vorrichtung nach Anspruch 9, bestehend aus einem Gehäuse (13), welches die Klappenhaltestange (10) umgibt, und dessen Fuß (13a) dazu bestimmt ist, mit einem eine zentrale Öffnung (0) besitzenden, die Auslauföffnung des Beckens bildenden Röhrensockel (15) zusammengebaut zu werden, und dessen oberer, ringförmiger Rand (15a) den Sitz der Klappe (11) bildet, dadurch gekennzeichnet, daß die zylindrische Hülle (7) und das besagte Gehäuse durch verschraubung verbunden sind, wobei die zylindrische Hülle z. B. ein Außengewinde (7b) aufweist, mittels welchem sie in eine axiale, innengewindete Öffnung (14a) geschraubt ist, womit das obere Ende (14) des besagten Gehäuses versehen ist.

11. Vorrichtung nach einem der Ansprüche 9 oder 10, dadurch gekennzeichnet, daß der feststehende Knopf (9) und die stationäre, zylindrische Hülle (7) durch Verschraubung verbunden sind, wobei der obere Teil der besagten Hülle und der besagte feststehende Knopf z. B. jeweils mit einem Gewinde (7c) und einer dazugehörigen Gewindebohrung versehen sind.

12. Vorrichtung nach einem der Ansprüche 6 bis 11, dadurch gekennzeichnet, daß die mitgenommene Stange (2) durch Verschraubung an der Klappenhaltestange (10) befestigt ist, wobei das untere Ende der besagten mitgenommenen Stange sich z. B. durch eine Schraube (2b) verlängert, die vorzugsweise mit dieser letzteren aus einem einzigen Stück geformt ist und in eine Mutter (10a) geschraubt wird, die axial auf dem oberen Teil der besagten Stange sitzt.

13. Vorrichtung nach Ansprüchen 10 und 12, dadurch gekennzeichnet, daß das Außengewinde (7b) der zylindrischen Hülle (7) und das den unteren Teil der mitgenommenen Stange (2) bildende Gewinde der Schraube (2b), identische Ganghöhe und Steigungsrichtung aufweisen.

Fig.1

Fig.2

Fig.3

Fig.4

Fig.5

Fig.6

Fig.7

Fig.8

Fig.9

Fig.10

Fig.11

Fig.12

Fig.13

Fig.14